# EUROPÄISCHE PATENTSCHRIFT

(11) **EP 3 346 314 B1**
(45) Veröffentlichungstag und Bekanntmachung des Hinweises auf die Patenterteilung: **02.12.2020**
(21) Anmeldenummer: 18150017.4
(22) Anmeldetag: 02.01.2018
(51) Int. Cl.: G02B 27/09, G02B 26/08, B23K 26/06, B23K 26/064

(54) **VORRICHTUNG UND VERFAHREN ZUR FORMUNG EINES LASERSTRAHLS DURCH EINEN PROGRAMMIERBAREN STRAHLFORMER**
DEVICE AND METHOD FOR FORMING A LASER BEAM BY MEANS OF A PROGRAMMABLE BEAM FORMER
DISPOSITIF ET PROCÉDÉ DE GÉNÉRATION D'UN FAISCEAU LASER À L'AIDE D'UN DISPOSITIF GÉNÉRATEUR DE FAISCEAU PROGRAMMABLE

(30) Priorität: 09.01.2017 DE 102017200170
(43) Veröffentlichungstag der Anmeldung: 11.07.2018
(73) Patentinhaber: Robert Bosch GmbH, 70442 Stuttgart (DE)
(72) Erfinder: Mikhaylov, Dmitriy, 71272 Renningen (DE); Shakirov, Damir, 75203 Koenigsbach-Stein (DE)

(56) Entgegenhaltungen:
- EP-A2- 1 068 923
- WO-A1-2010/092189
- DE-A1-102012 207 220
- KR-B1- 101 310 452
- US-B1- 6 208 369

## Beschreibung

### Stand der Technik

Die Erfindung betrifft eine Vorrichtung zur Formung eines Laserstrahls durch einen programmierbaren Strahlformer.

Die Erfindung betrifft weiterhin ein Verfahren zur Formung eines Laserstrahls durch einen programmierbaren Strahlformer.

Programmierbare Strahlformer zur Beeinflussung der örtlichen und zeitlichen Intensitätsverteilung eines Laserstrahls sind als "Spatial Light Modulator (SLM)" auf Basis von Flüssigkristallen oder als "Digital Micromirror Device" in Form von ein- oder zweidimensionalen Anordnungen bewegbarer Spiegel bekannt. Bei Kenntnis der Eigenschaften des Eingangsstrahls kann mit ihnen eine gewünschte Form einer Wellenfront eines Ausgangsstrahls gezielt eingestellt werden. Ein limitierender Faktor ist die dabei erzielbare Bildwiederholfrequenz, mit der unterschiedliche Strahlformen nacheinander eingestellt werden können, um die Strahlform an den jeweiligen Bearbeitungsprozess anzupassen. Bei einem Wechsel eines zur Strahlformung verwendeten Formungsmusters auf dem programmierbaren Strahlformer zu einem anderen Formungsmuster kann es für im Prozess spürbare Zeitdauer zu nicht beabsichtigten Übergangszuständen (unbekannter Zustand der Brechungsindex Matrix) kommen, die einen Laser-Bearbeitungsprozess beeinträchtigen können.

Die Schrift GB 2488780A beschreibt eine Anlage zur Bearbeitung eines Werkstücks mittels Laserstrahlung, die aus folgenden Komponenten besteht:
- einem Laser;
- einer steuerbaren Lichtverarbeitungseinheit, welche ein Raster von Steuerflächen enthält, die unabhängig voneinander eine Lichteigenschaft des Ausgangslichts jeder Steuerfläche einstellen können;
- einer Gitteranordnung von Mikrolinsen im optischen Pfad des Ausgangslichts der Steuerflächen der Lichtverarbeitungseinheit; und
- einer Fokussierungsoptik zur Erzeugung einer Anzahl von Fokussierungsregionen in dem zu bearbeitenden Werkstück, wobei jeder Mikrolinse eine Fokussierungsregion zugeordnet ist.

Auf dem Werkstück werden somit Bearbeitungsflächen im Raster der Mikrolinsenanordnung erzeugt, wobei jede Bearbeitungsfläche individuell steuerbar ist. Es ist keine sequentielle Ansteuerung und keine Zusammenführung des Lichtwegs auf eine einzige Bearbeitungsfläche vorgesehen.

Die Schrift WO 02/034446A3 beschreibt eine Anlage zur Bearbeitung eines Werkstücks mittels Laserstrahlung, die aus folgenden Komponenten besteht:
- einem linear polarisierten Laser zur Erzeugung eines linear polarisierten Lichtstrahls;
- einem Strahlteiler zur Aufspaltung des primären Lichtstrahls in eine Anzahl von sekundären Lichtstrahlen;
- einer Gitteranordnung von Lichtmodulatoren, welche eine Gitteranordnung von einzeln steuerbaren Elementen aufweist, welche jeweils einen der sekundären Lichtstrahlen durchlassen oder sperren kann;
- einer Gitteranordnung von Mikrolinsen, wobei die Mikrolinsen eine vorgegeben Brennweite aufweisen und wobei die Mikrolinsen jeweils einem steuerbaren Element des Lichtmodulators zugeordnet sind, so dass der sekundäre Lichtstrahl nach Durchtritt durch den Lichtmodulator durch eine Mikrolinse fokussiert wird; und
- eine Steuereinheit zur individuellen Steuerung jedes steuerbaren Elements des Lichtmodulators in einer vorgebbaren Art und Weise zwischen einem durchsichtigen und einem undurchsichtigen Zustand.

Die Anlage ist dazu ausgelegt, ein Werkstück mit einer Vielzahl von Laserstrahlen gleichzeitig zu bearbeiten. Es ist nicht vorgesehen, die Laserstrahlen auf dem Werkstück zusammenzuführen und so die Arbeitsfrequenz der Anordnung aus Strahlformern zu verbessern.

Eine bekannte Vorrichtung aus der Offenlegungsschrift WO2010/092189 A1 weist eine vielfache Überzahl an lichtformenden Segmentelementen auf, als es eigentlich zur Ausbildung eines Formungsmusters für einen Ausgangsstrahl benötigt wäre. Dies erfolgt allein aus Redundanzgründen. Das bedeutet, dass bei fehlerfreien Betrieb die redundant vorgesehenen Segmentelemente überhaupt nicht zum Einsatz kommen.

In der Patentschrift US6208369 B1 ist ein Laserprozess, beispielsweise zum Bohren kleinster Löcher, unter Einsatz eines Strahlformers beschrieben. Hierzu wird durch den Strahlformer ein entsprechendes Formungsmuster bereitgestellt, welches den Bohrprozess bewirkt. Für das Formungsmuster wird immer eine ganze Zeilenreihe eines zweidimensionalen Strahlformers zur Abbildung einer Punktelinie einheitlich bestrahlt. In einer Anreihung von vielen derartigen Zeilenreihen n-2. N-1, n, n+1, n+2 innerhalb eines zweidimensionalen Strahlformers wird immer eine nächstkommende Zeilenreihe fortlaufend bestrahlt bis zur Wiederholung eines Zyklus. Es ist explizit darauf hingewiesen, dass bei Strahlformern mit kleineren Schaltzeiten eine zunehmende Pixelzahl pro Zeilenreihe und eine Erhöhung der Zeilenreihen insgesamt gefordert wird, um die Abbildungsgeschwindigkeit des Formungsmusters beizubehalten

Die Patentschrift KR101310452 B1 offenbart eine Anordnung von mehreren Lasersystemen, in deren Lichtweg jeweils ein Strahlformer angeordnet ist. Alle Strahlformer weisen das gleiche Formungsmuster auf, die dann auf einem Bearbeitungsobjekt und über einen zusammengeführten Laserstrahl in Überdeckung gebracht sind. Alle Strahlformer werden daher dauerhaft bestrahlt, wobei die Strahlungsintensität auf die maximal ertragbare Strahlungsintensität eines jeweiligen Strahlungsformers begrenzt ist.

Die Offenlegungsschrift DE102012207220 A1 beschreibt eine Laserbearbeitungsanlage, bei welcher allgemein ein Strahlformer zur Ausbildung eines Strahlformungsmusters zum Einsatz kommt.

Es ist daher Aufgabe der Erfindung, eine Vorrichtung und ein Verfahren zur Erhöhung der Arbeitsfrequenz und zur Verminderung von Abbildungsfehlern einer Strahlformung für einen Laserstrahl bereitzustellen.

### Offenbarung der Erfindung

Die die Vorrichtung betreffende Aufgabe der Erfindung wird durch die Vorrichtung gemäß Anspruch 1 gelöst, d.h. u.a. dadurch, dass eine Ablenkeinheit zur abwechselnden Lenkung des Laserstrahls entlang eines ersten Lichtwegs und zumindest eines zweiten Lichtwegs auf einen ersten Strahlformer und zumindest einen zweiten Strahlformer vorhanden ist, dass eine Optikeinheit zur Zusammenführung des ersten und zumindest zweiten Lichtwegs nach der Strahlformung vorhanden ist, dass eine Steuereinheit zur Ansteuerung der Ablenkeinheit und des ersten und zumindest zweiten Strahlformers vorhanden ist und dass in der Steuereinheit eine Ablaufsteuerung zur abwechselnden Lenkung des Laserstrahls auf den ersten Lichtweg und den zumindest zweiten Lichtweg sowie zu einer Ansteuerung von einem Formungsmuster auf dem ersten Strahlformer und dem zumindest zweiten Strahlformer vorhanden ist. Die Vorrichtung ist nicht auf zwei Strahlformer und zwei Lichtwege beschränkt; es kann eine Vielzahl von Strahlformern und Lichtwegen vorgesehen sein. Dabei können die Strahlformer unterschiedliche Formungsmuster aufweisen, zwischen denen mit der Ablenkeinheit sehr schnell umgeschaltet werden kann. Die Wechselfrequenz ist somit nicht mehr von der Schaltgeschwindigkeit der Strahlformer (Bildwiederholfrequenz) abhängig. Durch die erhöhte Wechselfrequenz können hochdynamische Laserbearbeitungsprozesse wie Wobbeln oder Temperaturfeldtayloring verbessert eingesetzt werden. Da der einzelne Strahlformer nicht dauernd mit Laserlicht beaufschlagt ist, vermindert sich zudem dessen thermische Belastung. Bei gleicher thermischer Belastung kann die Prozessdauer verkürzt werden. Es ist nicht notwendig, dass die Lichtwege und Strahlformer immer in derselben Reihenfolge angesprochen werden. Es kann auch vorgesehen sein, die Reihenfolge von der Art des Formungsmusters oder der thermischen Beanspruchung der Strahlformer abhängig zu machen.

In einer Ausführungsform kann es vorgesehen sein, dass die Steuereinheit auch die Optikeinheit ansteuert um die Lichtwege nach den Strahlformern zusammenzuführen.

Ist die Vorrichtung so ausgelegt, dass die unterschiedlichen Lichtwege unterschiedliche Bereiche auf einem einzigen Strahlformer beaufschlagen, kann die Steuereinheit die Ablenkeinheit und den Strahlformer geeignet ansteuern.

Die Ablaufsteuerung ist dabei erfindungsgemäß so ausgelegt, dass eine Änderung eines Formungsmusters auf dem ersten Strahlformer nur vorhanden ist, wenn der Laserstrahl nicht entlang des ersten Lichtwegs gelenkt ist und dass eine Änderung eines Formungsmusters auf dem zweiten Strahlformer nur vorhanden ist, wenn der Laserstrahl nicht entlang des zweiten Lichtwegs gelenkt ist. Sinngemäß können weitere Strahlformer so eingebunden werden, dass eine Änderung des Formungsmusters nur durchgeführt wird, wenn der Strahlformer nicht mit Laserlicht beaufschlagt wird.

Die das Verfahren betreffende Aufgabe der Erfindung wird durch das Verfahren gemäß Anspruch 2 gelöst, d.h. u.a. dadurch, dass der Laserstrahl durch eine Ablenkeinheit abwechselnd entlang eines ersten Lichtwegs und zumindest eines zweiten Lichtwegs auf einen ersten Strahlformer und zumindest einen zweiten Strahlformer gelenkt wird und nach dem programmierbaren Strahlformer oder dem ersten Strahlformer und dem zweiten Strahlformer in einer Optikeinheit zu einem zusammengeführten Laserstrahl zusammengeführt wird. Mit der Ablenkeinheit kann zwischen unterschiedlichen Strahlformern mit unterschiedlichen Formungsmustern umgeschaltet werden, so dass die Wechselfrequenz zwischen Formungsmustern stark verbessert werden kann. In der Optikeinheit werden die Teilstrahlen aus den unterschiedlichen Lichtwegen auf eine gemeinsame optische Achse zusammengeführt, so dass sie gemeinsam geführt, abgelenkt und fokussiert werden können.

Dabei ist erfindungsgemäß vorgesehen, dass eine Änderung eines Formungsmusters auf einem der Strahlformer während einer Strahlpause vorgenommen wird in der dieser nicht mit Laserstrahlung beaufschlagt wird. Hierdurch kann der zusammengeführte Laserstrahl von Übergangseffekten (z.B. "Tearing") beim Wechsel von Formungsmustern auf den Strahlformern frei gehalten werden und die Qualität des Bearbeitungsprozesses kann verbessert werden.

In bevorzugten Anwendungen können die Vorrichtung oder das Verfahren zur Materialbearbeitung mit Laserlicht in Form von Schweißen, Gaslegieren, Löten, Beschriften, Markieren, Bohren, Säubern, Polieren oder zur Laserablation eingesetzt werden. Ferner können die Vorrichtung und das Verfahren in der Laserprojektionstechnik eingesetzt werden, wo sie die gleichen Vorteile bieten.

Beispielsweise können die Vorrichtung oder das Verfahren zur Laserprojektion eingesetzt werden.

Die Erfindung wird im Folgenden anhand eines in der Figur dargestellten Ausführungsbeispiels näher erläutert. Es zeigt:

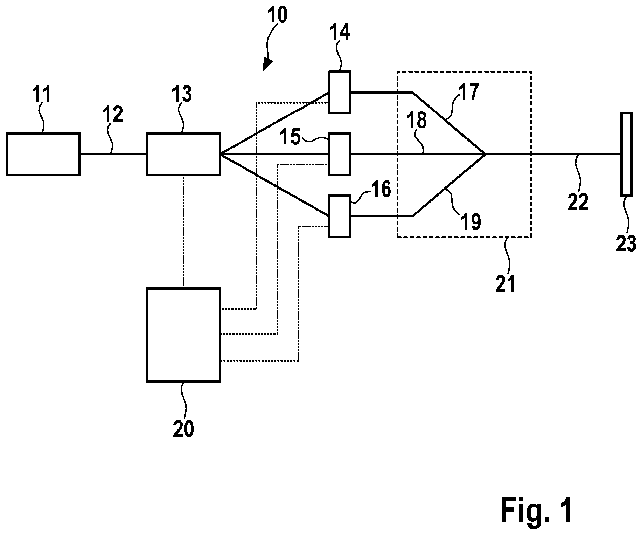

Figur 1 in einer schematischen Darstellung eine Laserbearbeitungsanlage in der das Verfahren angewendet werden kann.

Figur 1 zeigt schematisch eine Laserbearbeitungsanlage 10 mit einer Laserquelle 11, die einen Laserstrahl 12 aussendet. Der Laserstrahl 12 wird von einer Ablenkeinheit 13 abwechselnd entlang eines ersten Lichtwegs 17 einem ersten Strahlformer 14, entlang eines zweiten Lichtwegs 18 einem zweiten Strahlformer 15 und entlang eines dritten Lichtwegs 19 einem dritten Strahlformer 16 zugeführt. In einer Erweiterungen der Anordnung können auch eine größere Anzahl von Strahlformern über weitere Lichtwege mit Licht des Laserstrahls 12 beaufschlagt werden. Nach den Strahlformern 14, 15, 16 werden die Lichtwege 17, 18, 19 in einer Optikeinheit 21 so umgelenkt, dass sie entlang einer gemeinsamen optischen Achse zu einem zusammengeführten Laserstahl 22 zusammengeführt werden. Der zusammengeführte Laserstrahl 22 wird auf ein Werkstück 23 gerichtet, wo er beispielhaft zum Schweißen, Löten, Beschriften, Markieren, Gaslegieren, Bohren, Säubern, Polieren oder zum Materialabtrag dienen kann. Nach dem gleichen Prinzip kann eine Laserprojektion erzeugt werden. 23 ist dann eine Projektionsfläche. Eine Steuereinheit 20 steuert die Ablenkeinheit 13 und die Strahlformer 14, 15, 16 derart an, dass eine Änderung eines Formungsmusters auf einem Strahlformer 14, 15, 16 nur vorgenommen wird, während der Laserstrahl 12 einen der anderen Strahlformer 14, 15, 16 beaufschlagt. Hierdurch kann erreicht werden, dass Änderungen des Formungsmusters nur an nicht mit Laserlicht beaufschlagten Strahlformern vorgenommen werden und dass Übergangsformen zwischen zwei aufeinanderfolgenden Formungsmustern keine Auswirkung auf den zusammengeführten Laserstrahl 22 haben. Hierdurch wird die Qualität des zusammengeführten Laserstrahls 22 verbessert.

Die Verwendung einer Vielzahl von Strahlformern 14, 15, 16 hat den Vorteil, dass eine Bildwechselrate, mit der Änderungen in dem Formungsmuster für den zusammengeführten Laserstrahl 22 durchgeführt werden können, erheblich erhöht werden kann. Weiterhin sinkt die Wärmebelastung des einzelnen Strahlformers, da dieser nicht durchgehend mit Laserstrahlung beaufschlagt wird. Durch die erfindungsgemäße Anordnung kann eine Auswirkung von objektiven Speckles auf das Ergebnis einer Laserbearbeitung vermindert werden und damit das Bearbeitungsergebnis verbessert werden.

Neben der erfindungsgemäßen Ausführung besteht in einer anderen Ausführung einer Anordnung die Möglichkeit, dass der Laserstrahl 12 durch die Ablenkeinheit 13 auf unterschiedliche Bereiche eines einzelnen Strahlformers gelenkt werden anstatt ihn auf unterschiedliche Strahlformer zu lenken. In diesem Fall wird das Formungsmustern in dem gerade mit Laserlicht beaufschlagten Bereich unverändert gelassen und bei Bedarf in einem der nicht mit Laserlicht beaufschlagten Bereiche geändert.

Die Ablenkeinheit 13 kann als Polygonscanner, als akustooptischer oder elektrooptischer Modulator, als Anordnung von mit Galvanomotoren angetriebenen Spiegeln, als ein auf einer anderen Technologie beruhender Aktor für die Auslenkung eines Laserstrahls oder als eine Kombination der vorgenannten Einheiten ausgebildet sein. Es können in der Ablenkeinheit 13 mehrere Untereinheiten vorgesehen sein, um eine zweidimensionale Ablenkung zu erzielen. Die Optikeinheit 21 kann als System aus optischen Komponenten wie Spiegeln, Linsen oder Prismen ausgebildet sein. Sie kann von der Steuereinheit so angesteuert werden, dass bewegbare oder ansteuerbare optische Komponenten das von den Strahlformern kommende Laserlicht in den zusammengeführten Laserstrahl 22 mit einer gemeinsamen optischen Achse zusammenführen.

## Patentansprüche

1. Vorrichtung zur Formung eines Laserstrahls (12) durch einen programmierbaren Strahlformer unter Ausbildung eines Formungsmusters, wobei zur Reduzierung einer thermischen Wärmebelastung des Strahlformers bei gleichzeitiger Erhöhung einer Wechselfrequenz zwischen ausgebildeten Formungsmustern eine Ablenkeinheit (13) zur abwechselnden Lenkung des Laserstrahls entlang eines ersten Lichtwegs (17) auf einen ersten Strahlformer (14) und entlang zumindest eines zweiten Lichtwegs (18) auf zumindest einen zweiten Strahlformer (15) vorhanden ist, dass eine Optikeinheit (21) zur Zusammenführung des ersten und zumindest zweiten Lichtwegs (17, 18) entlang einer gemeinsamen optischen Achse zu einem zusammengeführten Laserstahl nach der Strahlformung vorhanden ist, dass eine Steuereinheit (20) zur Ansteuerung der Ablenkeinheit (13) und des ersten und zumindest zweiten Strahlformers (14, 15) vorhanden ist und dass in der Steuereinheit (20) eine Ablaufsteuerung zur abwechselnden Lenkung des Laserstrahls (12) auf den ersten Lichtweg (17) und den zumindest zweiten Lichtweg (18) sowie zu einer Ansteuerung von einem Formungsmuster auf dem ersten Strahlformer (14) und dem zumindest zweiten Strahlformer (15) vorhanden ist, wobei zum Ausschluss von Übergangsformen zwischen zwei aufeinanderfolgenden Formungsmustern im zusammengeführten Laserstrahl die Ablaufsteuerung so ausgelegt ist, dass eine Änderung eines Formungsmusters auf dem ersten Strahlformer (14) nur dann vorgenommen wird, wenn der Laserstrahl (12) nicht entlang des ersten Lichtwegs (17) gelenkt ist und dass eine Änderung eines Formungsmusters auf dem zweiten Strahlformer (15) nur vorgenommen wird, wenn der Laserstrahl (12) nicht entlang des zweiten Lichtwegs (18) gelenkt ist.

2. Verfahren zur Formung eines Laserstrahls (12) durch einen programmierbaren Strahlformer unter Ausbildung eines Formungsmusters, wobei zur Reduzierung einer thermischen Wärmebelastung des Strahlformers bei gleichzeitiger Erhöhung einer Wechselfrequenz zwischen ausgebildeten Formungsmustern der Laserstrahl (12) durch eine Ablenkeinheit (13) abwechselnd entlang eines ersten Lichtwegs (17) auf einen ersten Strahlformer (14) und entlang zumindest eines zweiten Lichtwegs (18) auf zumindest einen zweiten Strahlformer (15) gelenkt wird und nach dem ersten Strahlformer (14) und dem zumindest zweiten Strahlformer (15) in einer Optikeinheit (21) zu einem zusammengeführten Laserstrahl (22) entlang einer gemeinsamen optischen Achse zusammengeführt wird, wobei zum Ausschluss von Übergangsformen zwischen zwei aufeinanderfolgenden Formungsmustern im zusammengeführten Laserstrahl eine Änderung eines Formungsmusters auf einem der Strahlformer (14, 15) nur während einer Strahlpause vorgenommen wird in der dieser nicht mit Laserstrahlung beaufschlagt wird.

3. Anwendung einer Vorrichtung oder eines Verfahrens nach einem der vorgenannten Ansprüche zur Materialbearbeitung mit Laserlicht in Form von Schweißen, Gaslegieren, Löten, Beschriften, Markieren, Bohren, Säubern, Polieren oder zur Laserablation.

## Claims

1. Apparatus for shaping a laser beam (12) by way of a programmable beam shaper with a shaping pattern being formed, wherein a deflection unit (13) for alternately steering the laser beam along a first light path (17) to a first beam shaper (14) and along at least one second light path (18) to at least one second beam shaper (15) is present for the purposes of reducing a thermal load on the beam shaper while simultaneously increasing the switching frequencies between shaping patterns formed, wherein an optical unit (21) is present for combining the first and at least second light path (17, 18) along a common optical axis to form a combined laser beam downstream of the beam shaping, wherein a control unit (20) is present for driving the deflection unit (13) and the first and at least second beam shaper (14, 15) and wherein a sequence controller for alternately steering the laser beam (12) on the first light path (17) and the at least second light path (18) and for driving a shaping pattern on the first beam shaper (14) and the at least second beam shaper (15) is present in the control unit (20), wherein, for the purposes of excluding transition shapes between two successive shaping patterns in the combined laser beam, the sequence controller is designed in such a way that a change of a shaping pattern in the first beam shaper (14) is only undertaken if the laser beam (12) is not steered along the first light path (17) and that a change of a shaping pattern in the second beam shaper (15) is only undertaken if the laser beam (12) is not steered along the second light path (18).

2. Method for shaping a laser beam (12) by way of a programmable beam shaper with a shaping pattern being formed, wherein the laser beam (12) is alternately steered by a deflection unit (13) along a first light path (17) to a first beam shaper (14) and along at least one second light path (18) to at least one second beam shaper (15) and is combined in an optical unit (21) to form a combined laser beam (22) along a common optical axis downstream of the first beam shaper (14) and the at least one second beam shaper (15) for the purposes of reducing a thermal load on the beam shaper while simultaneously increasing the switching frequencies between shaping patterns formed, wherein, for the purposes of excluding transition shapes between two successive shaping patterns in the combined laser beam, changing a shaping pattern on one of the beam shapers (14, 15) is only undertaken during a beam pause, during which said beam shaper is not impinged by laser radiation.

3. Use of an apparatus or of a method according to either of the preceding claims for material processing with laser light in the form of welding, gas alloying, soldering, labelling, marking, boring, cleaning or polishing or for laser ablation.

## Revendications

1. Dispositif de mise en forme d'un faisceau laser (12) par un dispositif de mise en forme de faisceau programmable en réalisant un motif de mise en forme,
dans lequel, afin de réduire une charge thermique du dispositif de mise en forme de faisceau tout en augmentant une fréquence de changement entre des motifs de mise en forme réalisés, il existe une unité de déviation (13) pour guider le faisceau laser en alternance le long d'un premier chemin optique (17) vers un premier dispositif de mise en forme de faisceau (14) et le long d'au moins un deuxième chemin optique (18) vers au moins un deuxième dispositif de mise en forme de faisceau (15), il existe une unité optique (21) pour fusionner le premier et ledit au moins un deuxième chemin optique (17, 18) le long d'un axe optique commun en un faisceau laser fusionné après la mise en forme de faisceau, il existe une unité de commande (20) pour piloter l'unité de déviation (13) et le premier et ledit au moins un deuxième dispositif de mise en forme de faisceau (14, 15), et dans l'unité de commande (20), il existe un dispositif de commande de flux pour guider le faisceau laser (12) en alternance sur le premier chemin optique (17) et ledit au moins un deuxième chemin optique (18) ainsi que pour piloter un motif de mise en forme sur le premier dispositif de mise en forme de faisceau (14) et ledit au moins un deuxième dispositif de mise en forme de faisceau (15), dans lequel, pour exclure des formes intermédiaires entre deux motifs de mise en forme consécutifs dans le faisceau laser fusionné, le dispositif de commande de flux est conçu de telle sorte qu'un changement d'un motif de mise en forme sur le premier dispositif de mise en forme de faisceau (14) n'est effectué que si le faisceau laser (12) n'est pas guidé le long du premier chemin optique (17), et un changement d'un motif de mise en forme sur le deuxième dispositif de mise en forme de faisceau (15) n'est effectué que si le faisceau laser (12) n'est pas guidé le long du deuxième chemin optique (18).

2. Procédé de mise en forme d'un faisceau laser (12) par un dispositif de mise en forme de faisceau programmable en réalisant un motif de mise en forme,
dans lequel, pour réduire une charge thermique du dispositif de mise en forme de faisceau tout en augmentant une fréquence de changement entre des motifs de mise en forme réalisés, le faisceau laser (12) est guidé par une unité de déviation (13) en alternance le long d'un premier chemin optique (17) vers un premier dispositif de mise en forme de faisceau (14) et le long d'au moins un deuxième chemin optique (18) vers au moins un deuxième dispositif de mise en forme de faisceau (15), et après le premier dispositif de mise en forme de faisceau (14) et ledit au moins un deuxième dispositif de mise en forme de faisceau (15), est fusionné dans une unité optique (21) en un faisceau laser (22) fusionné le long d'un axe optique commun,
dans lequel, pour exclure des formes intermédiaires entre deux motifs de mise en forme consécutifs dans le faisceau laser fusionné, un changement d'un motif de mise en forme sur un premier dispositif de mise en forme de faisceau (14, 15) n'est effectué que dans une interruption de faisceau dans laquelle celui-ci ne reçoit pas de rayonnement laser.

3. Utilisation d'un dispositif ou d'un procédé selon l'une quelconque des revendications précédentes pour un usinage de matériaux avec de la lumière laser par soudage, alliage au gaz, brasage, inscription, marquage, perçage, nettoyage, polissage ou pour une ablation au laser.
